# EUROPÄISCHE PATENTSCHRIFT

(11) **EP 2 491 329 B1**
(45) Veröffentlichungstag und Bekanntmachung des Hinweises auf die Patenterteilung: **11.05.2016**
(21) Anmeldenummer: 10747607.9
(22) Anmeldetag: 29.07.2010
(51) Int. Cl.: F28D 20/02, F28F 13/00, F24H 7/02, F28F 19/00, F28D 20/00, F28F 13/12, F28F 13/16

(54) **LATENT-HYBRIDWÄRMESPEICHER MIT VERBESSERTER WÄRMEÜBERTRAGUNG, SOWIE VERFAHREN ZUM BETREIBEN EINES LATENT-HYBRIDWÄRMESPEICHERS**
LATENT HYBRID HEAT RESERVOIR HAVING IMPROVED HEAT TRANSFER, AND METHOD FOR OPERATING A LATENT HYBRID HEAT RESERVOIR
ACCUMULATEUR DE CHALEUR HYBRIDE LATENTE AVEC TRANSMISSION THERMIQUE AMÉLIORÉE, AINSI QUE PROCÉDÉ DE FONCTIONNEMENT D'UN ACCUMULATEUR DE CHALEUR HYBRIDE LATENTE

(30) Priorität: 31.07.2009 DE 102009035708
(43) Veröffentlichungstag der Anmeldung: 29.08.2012
(73) Patentinhaber: Trenkner, Frank, 01239 Dresden (DE)
(72) Erfinder: Trenkner, Frank, 01239 Dresden (DE)
(74) Vertreter: Lippert, Stachow & Partner
(86) Internationale Anmeldenummer: PCT/EP2010/061066
(87) Internationale Veröffentlichungsnummer: WO 2011/012685

(56) Entgegenhaltungen:
- EP-A1- 1 235 046
- WO-A1-95/00808
- DE-A1- 19 815 521
- DE-A1-102008 040 281
- DE-A1-102009 005 637
- US-A- 4 180 124
- US-A- 5 363 660

## Beschreibung

Die Erfindung betrifft einen Latent-Hybridwärmespeicher mit verbesserter Wärmeübertragung, zur Speicherung von Wärmeenergie aus beliebigen Wärmekreisläufen, wobei ein mit einem ersten Wärmespeichermedium gefüllter Wärmespeicherbehälter zur Aufnahme und Abgabe von Wärmeenergie über Wärmetauscher vorgesehen ist, wobei die Wärmetauscher in dem Wärmespeicherbehälter eingebaut sind, wobei in dem Wärmespeicherbehälter mindestens eine mit einem zweiten Wärmespeichermedium in Form von Phase Change Material gefüllte Wärmespeicherpatrone angeordnet ist und wobei diese mit einer Schabevorrichtung zur Beseitigung von erstarrtem Phase Change Material von deren Innenoberfläche versehen ist. Die Erfindung betrifft ferner ein Verfahren zum Betreiben eines solchen Latent-Hybridwärmespeichers.

Verschiedene Wärmetauscher, die sich in einem mit Wasser oder einer anderen Flüssigkeit gefüllten Wärmespeicher befinden, geben oder entnehmen Wärmeenergie für verschiedene Wärmeenergiesysteme, wie zum Beispiel Solarkreisläufe, Heizungskreisläufe, Warmwasseranlagen oder Nachheizungen.

Bei Latentwärmespeichern werden PCM (Phase Change Materials) eingesetzt, das sind Stoffe, die beim Schmelzen sehr viel Wärmeenergie aufnehmen und diese umgekehrt beim Erstarren wieder freisetzen.

Derartige Materialien sind dem Fachmann bekannt und werden daher an dieser Stelle nicht näher erläutert.

Wärmespeicher üblicher Bauart weisen einen mit Wasser gefüllten Behälter auf und sind mit einer Isolierung versehen, um gespeicherte Wärmeenergie im Speicher zu halten und werden häufig zur Wärmespeicherung bei Heizungsanlagen zur Warmwasserversorgung oder zur Nutzung von Prozesswärme eingesetzt.

Um die Wärmeträger für den Energietransport zum/vom Wärmespeicher z.B. Trinkwasser, Heizungswasser, Solarflüssigkeit und Wärmeträgeröl, nicht direkt miteinander zu verbinden, werden häufig Wärmetauscher eingesetzt, sie befinden sich innerhalb oder außerhalb des Speichers.

Modifizierte Wärmespeicher für spezielle Bereiche, wie zum Beispiel Solaranlagen oder Holzkessel werden auch Pufferspeicher, Schichtenspeicher, Duospeicher oder auch Kombispeicher genannt, sie sind meistens mit Wasser gefüllt, weil Wasser eine hohe spezifische Wärmekapazität und durch seine niedrige Viskosität ein hervorragendes Wärmeträgermedium ist.
Nachteilig hierbei ist, dass die mit Wasser gefüllten Speicher eine niedrige Energiedichte haben, so dass diese Wärmespeicher sehr voluminös sind und können aber nur in sehr kleinen Baugrößen in Gebäuden wie Einfamilienhäusern, Altbauten oder Neubauten ohne Keller eingesetzt werden. Weiterhin ist auch nachteilig, dass der Aufbau von Anlagen mit einem größeren Speichervolumen, meistens durch mehrere Einzelspeicher realisiert wird, wodurch sich ein großer Installationsaufwand ergibt.

Eingesetzt werden zur Speicherung von Wärmeenergie auch Latentwärmespeicher, zum Beispiel gefüllt mit PCM (Phase Change Materials), sie haben den Vorteil große Wärmemengen auf kleinstem Raum zu speichern, nachteilig war bisher, dass die gespeicherte Wärmeenergie bei Bedarf nur sehr langsam abgegeben werden kann.

In der DE 198 15 521 A1 wird ein Latent-Hybridwärmespeicher mit verbesserter Wärmeübertragung zur Speicherung von Wärmeenergie aus beliebigen Wärmekreisläufen beschrieben gemäß dem Oberbegriff des Anspruchs 1, bei dem ein mit einem ersten Wärmespeichermedium gefüllter Wärmespeicherbehälter zur Aufnahme und Abgabe von Wärmeenergie vorgesehen ist. In dem Wärmespeicherbehälter sind Wärmetauscher eingebaut, wobei in dem Wärmespeicherbehälter mindestens eine mit einem zweiten Wärmespeichermedium in Form eines Phase Change Materials gefüllte Wärmespeicherpatrone angeordnet ist.

Der vorliegenden Erfindung liegt die Aufgabe zugrunde, einen Latent-Hybridwärmespeicher mit deutlich verbesserter Wärmeübertragung zwischen einem ersten und einem zweiten Wärmespeichermedium zu schaffen. Der Erfindung liegt ferner die Aufgabe zugrunde, ein Verfahren zum Betreiben eines Latent-Hybridwärmespeichers zu schaffen.

Erreicht wird das mit einem Latent-Hybridwärmespeicher der eingangs genannten Art dadurch, dass das zweite Wärmespeichermedium in der mindestens einen Wärmespeicherpatrone mit magnetisierbaren Partikeln angereichert ist und dass die Wärmespeicherpatrone mit einer Einrichtung zur Erzeugung eines Magnetfeldes derart versehen ist, dass die Magnetfeldlinien im wesentlichen senkrecht aus der Innenseite der Wärmespeicherpatrone austreten und sich die magnetisierbaren Partikel entlang dieser Innenseite angelagert sind und wobei diese erstarrte Phase Charge Material mit der Schabevorrichtung entfernbar ist.

Dadurch, dass sich die magnetisierbaren Partikel entsprechend den physikalischen Gesetzmäßigkeiten entlang der sich ausbildenden Magnetfeldlinien an der Innenwand der Wärmespeicherpatrone anlagern, wird eine erhebliche Verbesserung des Wärmetransportes vom Phase Change Material durch die Innenwand auf das außerhalb der Wärmespeicherpatrone im Wärmespeicherbehälter befindliche erste Wärmespeichermedium erreicht. Somit kann das Phase Change Material Wärme wesentlich schneller aufnehmen und auch wieder abgeben.

Die Einrichtung zur Erzeugung eines Magnetfeldes kann eine elektromagnetische Einrichtung, oder eine Permanentmagnetfolie sein, oder aus einzelnen Permanentmagneten bestehen, welche die mindestens eine Wärmespeicherpatrone umgeben.

Als magnetisierbare Partikel kommen beispielsweise Eisenfeilspäne in Betracht.

Weiterhin kann in der mindestens einen Wärmespeicherpatrone mindestens ein Rührwerk zur Vermischung des zweiten Wärmespeichermediums integriert sein.

In einer Fortbildung der Erfindung beinhaltet das zweite Wärmespeichermedium weitere Stoffe zum Frost- und/oder Korrosionsschutz.

In einer besonderen Ausgestaltung der Erfindung ist die Vorrichtung zur Beseitigung von erstarrten Phase Change Material sowie der magnetisierbaren Partikel als mindestens ein Schaber in der mindestens einen Wärmespeicherpatrone ausgebildet.

Die mindestens eine Wärmespeicherpatrone kann einen eckigen Querschnitt ggf. mit abgeschrägten oder abgerundeten Kanten aufweisen, wobei der Schaber dann die Kontur der Innenwand der mindestens einen Wärmespeicherpatrone aufweist, entlang der Längserstreckung der Innenwand bewegbar und mit Aussparungen zum Durchlass des zweiten Wärmespeichermediums versehen ist.

Der Schaber ist mittels eines Antriebes durch die mindestens eine Wärmespeicherpatrone bewegbar, wobei als Antrieb ein Spindeltrieb mit Rutschkupplung in Betracht kommt.

Eine alternative Ausgestaltung der Erfindung ist dadurch gekennzeichnet, dass die mindestens eine Wärmespeicherpatrone einen runden Querschnitt aufweist, im Wärmespeicherbehälter drehbar gelagert ist und mit einem sich längs derselben erstreckenden Schaber versehen ist.

Die Position des Schabers in der mindestens einen Wärmespeicherpatrone wird durch die Schwerkraft bestimmt, so dass dieser ein derartiges Gewicht aufweisen muss, dass der Schaber infolge der Viskosität des Phase Change Materials weitgehend seine Position beibehält, während sich die Wärmespeicherpatrone dreht.

Die der Erfindung zugrunde liegende Aufgabe wird bei einem Latent-Hybridwärmespeicher der eingangs genannten Art auch durch ein Verfahren dadurch gelöst, dass das zweite Wärmespeichermedium mit magnetisierbaren Partikeln angereichert wird, dass an der Innenwand der mindestens einen Wärmespeicherpatrone ein Magnetfeld erzeugt wird, so dass sich die magnetisierbaren Partikel an der Innenwand der Wärmespeicherpatrone anlagern, wobei die an der Innenwand angelagerten magnetisierbare Partikel sowie das Phase Change Material periodisch abgeschabt und mit dem zweiten Wärmespeichermedium vermischt wird.

Durch die vorliegende Erfindung wird ein großes Wärmespeichervolumen für verschiedene Systeme, wie sie in ökologisch gebauten Häusern häufig vorkommen, auf kleinstem Raum bereitgestellt, wobei insbesondere ein wesentlich schnellerer Wärmetransport zwischen den beiden Wärmespeichermedien erreicht wird.

Die Erfindung soll nachfolgend an einem Ausführungsbeispiel näher erläutert werden. In den zugehörigen Zeichnungen zeigen:
- Fig. 1:: eine schematische Darstellung eines erfindungsgemäßen Latent-Hybridwärmespeichers mit integrierten Wärmetauschern;
- Fig. 2:: eine schematische Darstellung eines erfindungsgemäßen Latent-Hybridwärmespeichers mit Anschlüssen für Erweiterungsbausteine sowie einer Einrichtung zum Entfernen von Material von der Innenwand der Wärmetauscherpatronen;
- Fig. 3:: Einzelheiten von runden Wärmespeicherpatronen mit einer Einrichtung zur Erzeugung eines Magnetfeldes sowie an der Innenwand angelagertes magnetisierbares Material;
- Fig. 4:: eine schematische Querschnittdarstellung eines erfindungsgemäßen Latent-Hybridwärmespeichers mit eckigem Querschnitt;
- Fig. 5:: eine schematische Draufsicht auf eine eckige Wärmespeicherpatrone nach Fig. 4; und
- Fig. 6:: eine Seitenansicht einer runden Wärmespeicherpatrone nach Fig. 3, mit gewichtsbelasteten Schabern.

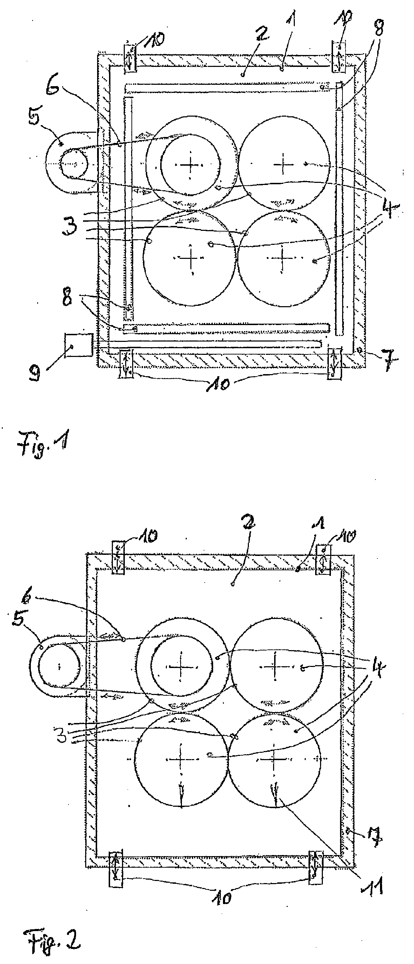

Den prinzipiellen Aufbau des erfindungsgemäßen Latent-Hybridwärmespeichers zeigt Fig. 1. In einem Wärmespeicherbehälter 1, gefüllt mit einem ersten Wärmespeichermedium 2, z.B. Wasser, befinden sich ein oder mehrere Wärmespeicherpatronen 3, die mit einem zweiten Wärmespeichermedium 4, z.B. PCM (Phase Change Materials), gefüllt sind. Weiterhin befinden sich im Wärmespeicherbehälter 1 verschiedene Wärmetauscher 8 zur hydraulischen Anbindung an verschiedene Wärmeenergiesysteme, wobei die Wärmetauscher 8 zum Beispiel an Solarkreisläufe, Erdwärmekreisläufe, Warmwasserversorgung, Nachheizkreisläufe, Prozesswärmekreisläufe und Heizungskreisläufe angeschlossen sein können. Die Wärmetauscher 8 sind untereinander hydraulisch getrennt, weil oftmals verschiedene Wärmeträger verwendet werden und häufig auch unterschiedliche Leitungsdrücke herrschen. Weiterhin wird der Wärmespeicherbehälter durch eine Isolation 7 umgeben.

Die Wärmespeicherpatronen 3 sind im Wärmespeicherbehälter 1 drehbar gelagert und mit einer Antriebseinheit 5 außerhalb des Wärmespeicherbehälters verbunden. Befinden sich mehrere Wärmespeicherpatronen 3 im Wärmespeicherbehälter 1, so sind die Wärmespeicherpatronen 3 einander berührend parallel nebeneinander horizontal oder vertikal angeordnet. Damit genügt es, nur eine der Wärmespeicherpatronen 3 mit der Antriebseinheit 5 zu verbinden, da die anderen Wärmespeicherpatronen 3 durch Reibung mit gedreht werden.

Zusätzlich können die Außenflächen der Wärmespeicherpatronen 3 außen teilweise mit einem die Reibung erhöhenden Material, wie Gummi oder einem Kunststoff, versehen sein.

Alternativ kann die Übertragung der Drehbewegung von einer Wärmespeicherpatrone auf die übrigen über miteinander gekoppelte Zahnräder, oder auch durch Riemen-, Zahnriemen oder auch Kettentriebe erfolgen.

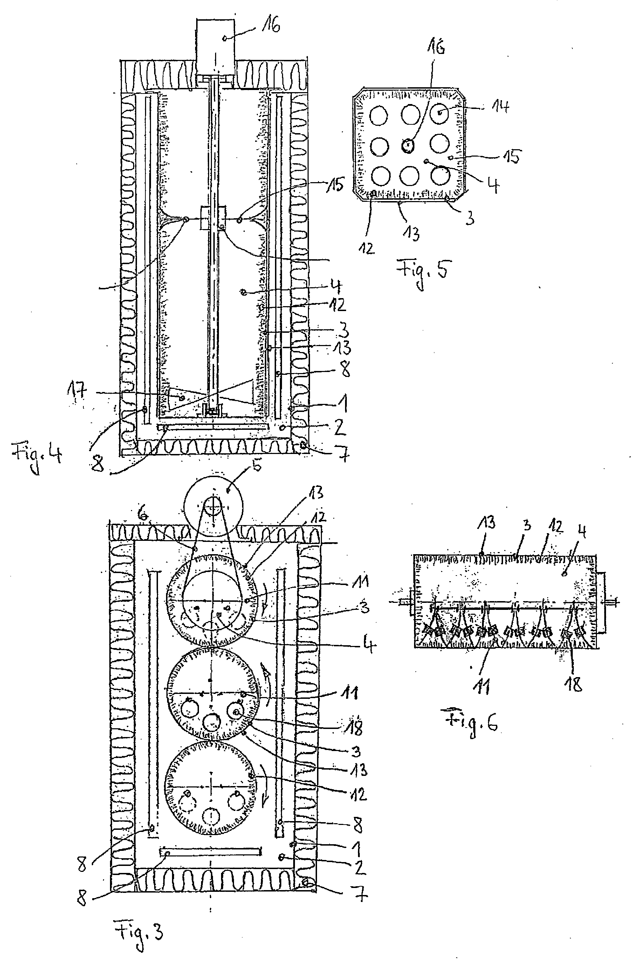

Das zweite Wärmespeichermedium 4 ist mit magnetisierbaren Partikeln 12, z.B. Eisenfeilspänen, angereichert und die Wärmespeicherpatronen 3 mit einer Einrichtung zu Erzeugung eines Magnetfeldes 13 versehen, wie in Fig. 3 schematisch angedeutet. Mit dieser Einrichtung 13 wird ein Magnetfeld aufgebaut, dessen Magnetfeldlinien hauptsächlich senkrecht aus der Innenseite der Wärmespeicherpatrone 3 austreten. Entlang dieser Magnetfeldlinien lagern sich die magnetisierbaren Partikel 12 an.

Dadurch, dass sich die magnetisierbaren Partikel 12 entsprechend den physikalischen Gesetzmäßigkeiten entlang der sich ausbildenden Magnetfeldlinien an der Innenwand der Wärmespeicherpatrone 3 anlagern und somit quasi eine gewaltige Vergrößerung der metallischen Oberfläche der Innenwand erreicht wird, wird eine erhebliche Verbesserung des Wärmetransportes vom Phase Change Material durch die Innenwand auf das außerhalb der Wärmespeicherpatrone 3 im Wärmespeicherbehälter 1 befindliche erste Wärmespeichermedium 2 erreicht. Somit kann das Phase Change Material Wärme wesentlich schneller aufnehmen und auch wieder abgeben.

Die Einrichtung zur Erzeugung eines Magnetfeldes 13 kann eine elektromagnetische Einrichtung, wie in Fig. 3, 4 angedeutet, oder eine Permanentmagnetfolie sein, oder auch aus einzelnen Permanentmagneten bestehen, welche die mindestens eine Wärmespeicherpatrone 3 umgeben.

Das erste Wärmespeichermedium 2 nimmt bei Wärmezufuhr über die Anschlüsse an die Wärmetauscher 8 oder Elektroheizungen 9 im Wärmespeicherbehälter 1 sehr schnell Wärmeenergie auf. Diese Wärmeenergie wird dann aus dem Wärmespeichermedium 2 vermittelt über das magnetisierbare Material 12, welches den natürlichen Wärmeübergang deutlich verbessert, kontinuierlich an die Wärmespeicherpatronen 3, gefüllt mit Phase Change Material, abgegeben.

Wird Wärmeenergie dem Wärmespeicherbehälter 1 entnommen, kommt die vorher gespeicherte Wärmeenergie aus den Speicherpatronen 3, ebenfalls vermittelt über das magnetisierbare Material 11, welches den natürlichen Wärmeübergang deutlich verbessert, in das Wärmespeichermedium 1, welches dann die Weitergabe der Wärmeenergie über die Wärmetauscher 8 und / oder die Anschlüsse für Erweiterung 10 gewährleistet.

Durch die Erfindung wird somit ein schnellerer Wärmetransport zwischen den beiden Wärmespeichermedien 1, 2 erreicht.

Die Zufuhr und die Abgabe der Wärmeenergie erfolgt über die Anschlüsse der Wärmetauscher 8. Über die Elektroheizungen 7 wird im Bedarfsfall ausschließlich Wärme zugeführt.

Durch die Erfindung ist es möglich, einmal Wärmeenergie über Wärmetauscher 8 befindlich im Wasser (erstes Wärmespeichermedium 2) besonders schnell aufzunehmen und auch besonders schnell abzugeben. Durch die Einbettung von Wärmespeicherpatronen 3 gefüllt mit PCM (Phase Change Materials) im Wasser ist es möglich, viel Wärmeenergie kontinuierlich zwischen Wasser und den PCM-Speicherpatronen auszutauschen.

Die Wärmespeicherpatronen 3 sind nicht ruhend im Wärmespeicherbehälter 1 eingebaut, sondern horizontal oder vertikal eingebaut und führen eine drehende oder alternierende Bewegung aus. Dadurch wird der Wärmeaustausch an deren Oberfläche verbessert und es ergibt sich eine gleichmäßigere Temperaturverteilung innerhalb der Wärmespeicherpatrone 3.

Die Bewegung wird von einer Antriebseinheit 5 über eine Kraftübertragungseinheit 6 an eine der beweglich gelagerten Wärmespeicherpatronen 3 und von dieser an die übrigen übertragen.

Weiterhin kann in jeder der Wärmespeicherpatronen 3 mindestens ein nicht dargestelltes Rührwerk zur Vermischung des zweiten Wärmespeichermediums 4 integriert sein.

Zum Beseitigen von erstarrtem Phase Change Material sowie des magnetisierbaren Materials 12 von der Innenwand der Wärmespeicherpatronen 3 ist mindestens eine Schabevorrichtung 11 (Fig. 3) bzw. 15 (Fig. 4 in den Wärmespeicherpatronen 3 vorgesehen.

Die Wärmespeicherpatronen 3 können auch einen eckigen Querschnitt ggf. mit abgeschrägten oder abgerundeten Kanten aufweisen (Fig. 4,5), wobei der Schaber 15 dann die Kontur der Innenwand der Wärmespeicherpatrone 3 aufweist. Der Schaber 15 ist entlang der Längs- oder Quererstreckung der Innenwand der Wärmespeicherpatrone 3 bewegbar und mit Öffnungen 14 zum Durchlass des zweiten Wärmespeichermediums versehen (Fig. 5).

Der Schaber 15 ist mittels eines Antriebes 16 längs durch die Wärmespeicherpatrone 3 bewegbar, wobei als Antrieb 16 ein Spindeltrieb in Betracht kommt, der beispielsweise mit einer Rutschkupplung ausgestattet ist, um eine Überlastung des Antriebes zu vermeiden. Alternativ kann der Antrieb mit einer Drehzahlüberwachung ausgestattet sein, so dass bei sinkender Drehzahl und beispielsweise nach Ablauf einer vorgegebenen Zeit der Antrieb abgeschaltet werden kann.

Andere Möglichkeiten bestehen in einer Positions- oder Bewegungsüberwachung des Schabers 15.

Diese Maßnahmen sind notwendig, damit in der Wärmespeicherpatrone 3 erstarrtes Phase Change Material nicht eine Überlastung des Antriebes 16 verursachen kann. Diese Rutschkupplung kann auch derart mit dem Antrieb gekoppelt sein, dass ein Ansprechen derselben nach einer einstellbaren Verzögerungszeit zum Abschalten des Antriebes 16 führt.

Um einen besseren Wärmetransport und eine bessere Wärmeverteilung zu erreichen, befindet sich in den Wärmespeicherpatronen 3 ein Rührwerk 17 (Fig. 4). Dieses Rührwerk 17 kann mit der Spindel des Antriebes 16 gekoppelt sein, so dass ein zusätzlicher Antrieb nicht notwendig ist.

Bei den runden Wärmespeicherpatronen 3 gem. Fig. 1 - 3 sowie Fig. 6 ist eine Schabevorrichtung 11 vorgesehen. Diese kann sich längs oder auch quer zur Innenwand der Wärmespeicherpatrone 3 erstrecken. Fig. 6 zeigt Einzelheiten einer Schabevorrichtung 11, die gewissermaßen pflugscharartig ausgebildet ist, um die Reibungskräfte in Grenzen zu halten.

Die Position der Schabevorrichtung 11 in der Wärmespeicherpatrone 3 wird durch die Schwerkraft bestimmt. Die Schabevorrichtung 11 muss ein derartiges Gewicht aufweisen, dass diese infolge der Viskosität des Phase Change Materials weitgehend ihre Position beibehält, während sich die Wärmespeicherpatrone 3 dreht. Zu diesem Zweck sind an den Schabevorrichtungen 11 zusätzliche Gewichte 18 angebracht (Fig. 3, 6).

## Patentansprüche

1. Latent-Hybridwärmespeicher mit verbesserter Wärmeübertragung, zur Speicherung von Wärmeenergie aus beliebigen Wärmekreisläufen, wobei ein mit einem ersten Wärmespeichermedium gefüllter Wärmespeicherbehälter zur Aufnahme und Abgabe von Wärmeenergie über Wärmetauscher vorgesehen ist, wobei die Wärmetauscher in dem Wärmespeicherbehälter eingebaut sind, wobei in dem Wärmespeicherbehälter mindestens eine mit einem zweiten Wärmespeichermedium in Form von Phase Change Material gefüllte Wärmespeicherpatrone angeordnet ist **dadurch gekennzeichnet, dass** diese Wärmespeicherpatrone mit einer Schabevorrichtung zur Beseitigung von erstarrtem Phase Change Material von deren Innenoberfläche versehen ist, und dass das zweite Wärmespeichermedium (4) in der mindestens einen Wärmespeicherpatrone (3) mit magnetisierbaren Partikeln angereichert ist und dass die zweite Wärmespeicherpatrone (3) mit einer Einrichtung zu Erzeugung eines Magnetfeldes (13) derart versehen ist, dass die Magnetfeldlinien im wesentlichen senkrecht aus der Innenseite der Wärmespeicherpatrone (3) austreten, und sich die magnetisierbaren Partikel (12) entlang dieser Innenseite anlagern und wobei dieses erstarrte Phase Change Material mit der Schabevorrichtung (11; 15) entfernbar ist

2. Latent-Hybridwärmespeicher nach Anspruch 1, **dadurch gekennzeichnet, dass** die Einrichtung zur Erzeugung eines Magnetfeldes (13) eine elektromagnetische Einrichtung, oder eine Permanentmagnetfolie ist, oder aus einzelnen Permanentmagneten besteht, welche die mindestens eine Wärmespeicherpatrone (3) umgeben.

3. Latent-Hybridwärmespeicher nach Anspruch 1 oder 2, **dadurch gekennzeichnet, dass** die magnetisierbaren Partikel (12) Eisenfeilspäne sind.

4. Latent-Hybridwärmespeicher nach einem der Ansprüche 1 bis 3, **dadurch gekennzeichnet, dass** in der mindestens einen Wärmespeicherpatrone (3) ein Rührwerk (17) zur Vermischung des zweiten Wärmespeichermediums (4) integriert ist.

5. Latent-Hybridwärmespeicher nach einem der vorhergehenden Ansprüche 1 bis 4, **dadurch gekennzeichnet, dass** das zweite Wärmespeichermedium (4) weitere Stoffe zum Frost- und/oder Korrosionsschutz beinhaltet.

6. Latent-Hybridwärmespeicher nach Anspruch 1, **dadurch gekennzeichnet, dass** die Vorrichtung zur Beseitigung von erstarrtem Phase Change Material sowie der magnetisierbaren Partikel (12) als mindestens ein Schaber (11; 15) in der mindestens einen Wärmespeicherpatrone (3) ausgebildet ist.

7. Latent-Hybridwärmespeicher nach Anspruch 1 bis 6, **dadurch gekennzeichnet, dass** die mindestens eine Wärmespeicherpatrone (3) einen eckigen Querschnitt aufweist.

8. Latent-Hybridwärmespeicher nach Anspruch 6 und 7, **dadurch gekennzeichnet, dass** der Schaber (15) die Kontur der Innenwand der mindestens einen Wärmespeicherpatrone (3) aufweist, entlang deren Innenwand bewegbar ist und mit Aussparungen (14) zum Durchlass des zweiten Wärmespeichermediums (4) versehen ist.

9. Latent-Hybridwärmespeicher nach Anspruch 8, **dadurch gekennzeichnet, dass** der Schaber (15) mittels eines Antriebes (14) längs durch die mindestens eine Wärmespeicherpatrone (3) bewegbar ist.

10. Latent-Hybridwärmespeicher nach Anspruch 9, **dadurch gekennzeichnet, dass** der Antrieb (16) ein Spindeltrieb mit Rutschkupplung ist.

11. Latent-Hybridwärmespeicher nach Anspruch 1 bis 6, **dadurch gekennzeichnet, dass** die mindestens eine Wärmespeicherpatrone (3) einen runden Querschnitt aufweist, im Wärmespeicherbehälter (1) drehbar gelagert ist und mit einem Schaber (11) versehen ist.

12. Latent-Hybridwärmespeicher nach Anspruch 11, **dadurch gekennzeichnet, dass** die Position des Schabers (11) in der mindestens einen Wärmespeicherpatrone (3) durch die Schwerkraft bestimmt wird.

13. Verfahren zum Betreiben eines Latent-Hybridwärmespeichers nach den Ansprüchen 1 bis 6, **dadurch gekennzeichnet, dass** das zweite Wärmespeichermedium (4) mit magnetisierbaren Partikeln angereichert wird, dass an der Innenwand der mindestens einen Wärmespeicherpatrone (3) ein Magnetfeld erzeugt wird, so dass sich das magnetisierbare Material an der Innenwand der Wärmespeicherpatrone (3) anlagert, wobei das an der Innenwand angelagerte Material periodisch abgeschabt und mit dem zweiten Wärmespeichermedium vermischt wird.

## Claims

1. Latent hybrid heat accumulator having an improved transfer of heat, for storing thermal energy from any desired thermal circuits, a heat storage reservoir which is filled with a first heat storage medium being provided for receiving and outputting thermal energy via heat exchangers, the heat exchangers being installed in the heat storage reservoir, at least one heat storage cartridge which is filled with a second heat storage medium in the form of phase-change material being arranged in the heat storage reservoir, **characterized in that** the said heat storage cartridge is provided with a scraping apparatus for removing solidified phase-change material from its inner surface, and **in that** the second heat storage medium (4) in the at least one heat storage cartridge (3) is augmented with magnetizable particles, and **in that** the second heat storage cartridge (3) is provided with a device for generating a magnetic field (13), in such a way that the magnetic field lines exit substantially perpendicularly from the inner side of the heat storage cartridge (3), and the magnetizable particles (12) accumulate along the said inner side, and it being possible for the said solidified phase-change material to be removed by way of the scraping apparatus (11; 15).

2. Latent hybrid heat accumulator according to Claim 1, **characterized in that** the device for generating a magnetic field (13) is an electromagnetic device or a permanent magnetic foil, or consists of individual permanent magnets which surround the at least one heat storage cartridge (3).

3. Latent hybrid heat accumulator according to Claim 1 or 2, **characterized in that** the magnetizable particles (12) are iron filings.

4. Latent hybrid heat accumulator according to one of Claims 1 to 3, **characterized in that** a stirring unit (17) for mixing the second heat storage medium (4) is integrated into the at least one heat storage cartridge (3).

5. Latent hybrid heat accumulator according to one of the preceding Claims 1 to 4, **characterized in that** the second heat storage medium (4) contains further substances for anti-freeze and/or anti-corrosion protection.

6. Latent hybrid heat accumulator according to Claim 1, **characterized in that** the apparatus for removing solidified phase-change material and the magnetizable particles (12) is configured as at least one scraper (11; 15) in the at least one heat storage cartridge (3).

7. Latent hybrid heat accumulator according to Claims 1 to 6, **characterized in that** the at least one heat storage cartridge (3) has an angular cross section.

8. Latent hybrid heat accumulator according to Claims 6 and 7, **characterized in that** the scraper (5) has the contour of the inner wall of the at least one heat storage cartridge (3), can be moved along its inner wall and is provided with cut-outs (14) for the passage of the second heat storage medium (4).

9. Latent hybrid heat accumulator according to Claim 8, **characterized in that** the scraper (15) can be moved longitudinally through the at least one heat storage cartridge (3) by means of a drive (14).

10. Latent hybrid heat accumulator according to Claim 9, **characterized in that** the drive (16) is a spindle drive with a slipping clutch.

11. Latent hybrid heat accumulator according to Claims 1 to 6, **characterized in that** the at least one heat storage cartridge (3) has a round cross section, is mounted rotatably in the heat storage reservoir (1) and is provided with a scraper (11).

12. Latent hybrid heat accumulator according to Claim 11, **characterized in that** the position of the scraper (11) in the at least one heat storage cartridge (3) is determined by gravity.

13. Method for operating a latent hybrid heat accumulator according to Claims 1 to 6, **characterized in that** the second heat storage medium (4) is augmented with magnetizable particles, and **in that** a magnetic field is generated on the inner wall of the at least one heat storage cartridge (3), with the result that the magnetizable material accumulates on the inner wall of the heat storage cartridge (3), the material which has accumulated on the inner wall being scraped off periodically and being mixed with the second heat storage medium.

## Revendications

1. Accumulateur de chaleur latente hybride comprenant un transfert thermique amélioré, pour accumuler de l'énergie thermique provenant de circuits de chaleur quelconques, un récipient accumulateur de chaleur rempli avec un premier milieu accumulateur de chaleur étant prévu pour recevoir et délivrer de l'énergie thermique par le biais d'échangeurs de chaleur, les échangeurs de chaleur étant incorporés dans le récipient accumulateur de chaleur, au moins une cartouche d'accumulateur de chaleur remplie avec un deuxième milieu accumulateur de chaleur sous la forme d'un matériau à changement de phase étant disposée dans le récipient accumulateur de chaleur, **caractérisé en ce que** ladite cartouche d'accumulateur de chaleur est pourvue d'un dispositif de raclage pour éliminer de sa surface intérieure le matériau à changement de phase solidifié, et **en ce que** le deuxième milieu accumulateur de chaleur (4) dans l'au moins une cartouche d'accumulateur de chaleur (3) est enrichi avec des particules magnétisables et **en ce que** la deuxième cartouche d'accumulateur de chaleur (3) est pourvue d'un dispositif pour générer un champ magnétique (13) de telle sorte que les lignes de champ magnétique sortent essentiellement perpendiculairement du côté intérieur de la cartouche d'accumulateur de chaleur (3) et que les particules magnétisables (12) s'accumulent le long de ce côté intérieur, ce matériau à changement de phase solidifié pouvant être enlevé avec le dispositif de raclage (11 ; 15).

2. Accumulateur de chaleur latente hybride selon la revendication 1, **caractérisé en ce que** le dispositif pour générer un champ magnétique (13) est un dispositif électromagnétique ou une feuille à aimantation permanente ou se compose d'aimants permanents individuels qui entourent l'au moins une cartouche d'accumulateur de chaleur (3).

3. Accumulateur de chaleur latente hybride selon la revendication 1 ou 2, **caractérisé en ce que** les particules magnétisables (12) sont des copeaux de limaille de fer.

4. Accumulateur de chaleur latente hybride selon l'une quelconque des revendications 1 à 3, **caractérisé en ce qu'**un mécanisme agitateur (17) pour mélanger le deuxième milieu accumulateur de chaleur (4) est intégré dans l'au moins une cartouche d'accumulateur de chaleur (3).

5. Accumulateur de chaleur latente hybride selon l'une quelconque des revendications précédentes 1 à 4, **caractérisé en ce que** le deuxième milieu accumulateur de chaleur (4) contient des substances supplémentaires pour la protection contre le givre et/ou la corrosion.

6. Accumulateur de chaleur latente hybride selon la revendication 1, **caractérisé en ce que** le dispositif pour éliminer le matériau à changement de phase solidifié ainsi que les particules magnétisables (12) est réalisé sous la forme d'au moins un racloir (11 ; 15) dans l'au moins une cartouche d'accumulateur de chaleur (3).

7. Accumulateur de chaleur latente hybride selon les revendications 1 à 6, **caractérisé en ce que** l'au moins une cartouche d'accumulateur de chaleur (3) présente une section transversale polygonale.

8. Accumulateur de chaleur latente hybride selon les revendications 6 et 7, **caractérisé en ce que** le racloir (15) présente le contour de la paroi intérieure de l'au moins une cartouche d'accumulateur de chaleur (3), peut être déplacé le long de sa paroi intérieure et est pourvu d'évidements (14) pour le passage du deuxième milieu accumulateur de chaleur (4).

9. Accumulateur de chaleur latente hybride selon la revendication 8, **caractérisé en ce que** le racloir (15) peut être déplacé au moyen d'un entraînement (14) longitudinalement à travers l'au moins une cartouche d'accumulateur de chaleur (3).

10. Accumulateur de chaleur latente hybride selon la revendication 9, **caractérisé en ce que** l'entraînement (16) est un entraînement à broche avec un accouplement à glissement.

11. Accumulateur de chaleur latente hybride selon les revendications 1 à 6, **caractérisé en ce que** l'au moins une cartouche d'accumulateur de chaleur (3) présente une section transversale ronde, est supportée à rotation dans le récipient accumulateur de chaleur (1) et est pourvue d'un racloir (11).

12. Accumulateur de chaleur latente hybride selon la revendication 11, **caractérisé en ce que** la position du racloir (11) dans l'au moins une cartouche d'accumulateur de chaleur (3) est déterminée par la force de gravité.

13. Procédé pour faire fonctionner un accumulateur de chaleur latente hybride selon les revendications 1 à 6, **caractérisé en ce que** le deuxième milieu accumulateur de chaleur (4) est enrichi avec des particules magnétisables, **en ce qu'**un champ magnétique est produit au niveau de la paroi intérieure de l'au moins une cartouche d'accumulateur de chaleur (3) de telle sorte que le matériau magnétisable s'accumule contre la paroi intérieure de la cartouche d'accumulateur de chaleur (3), le matériau accumulé contre la paroi intérieure étant raclé périodiquement et étant mélangé avec le deuxième milieu accumulateur de chaleur.
